# EUROPÄISCHE PATENTSCHRIFT

(11) **EP 0 869 019 B1**
(45) Veröffentlichungstag und Bekanntmachung des Hinweises auf die Patenterteilung: **15.06.2005**
(21) Anmeldenummer: 97120319.5
(22) Anmeldetag: 20.11.1997
(51) Int. Cl.: B60J 5/04

(54) **Seitenaufprallträger für Kfz-Türen**
Side impact beam for motor vehicle door
Poutre d'enfoncement latéral pour portes de véhicule automobile

(30) Priorität: 24.12.1996 DE 19654376
(43) Veröffentlichungstag der Anmeldung: 07.10.1998
(73) Patentinhaber: ThyssenKrupp Automotive AG, 44793 Bochum (DE)
(72) Erfinder: Harbig, Peter, 33842 Werther (DE); Schmitt, Michael, 33615 Bielefeld (DE); Steinhöfer, Detlef, 33758 Schloss Holte-Stuckenbrock (DE)

(56) Entgegenhaltungen:
- WO-A-94/07709
- DE-A- 4 307 079
- DE-A- 4 340 033
- DE-C- 3 709 489
- DE-U- 29 620 079

## Beschreibung

Die Erfindung betrifft einen Seitenaufprallträger für Kfz-Türen aus einem im Querschnitt profilierten Blechstreifen, der wenigstens eine längslaufende Sicke und beidseits an die Sicke anschließende Materialstreifen aufweist, wobei der Blechstreifen im wesentlichen ebene Enden zur Befestigung an der Kfz-Tür aufweist und wobei die Höhe der Sicke im Übergangsbereich zu den ebenen Enden des Blechstreifens kontinuierlich abnimmt.

Ein bekannter Seitenaufprallträger der eingangs beschriebenen Gattung (WO 94/07709 A1) besteht aus einem hochfesten Stahlwerkstoff mit einer Sicke, die ein Trapezprofil aufweist. Ein derartiges Profil wird durch aufwendige Warmumformung hergestellt. Der Seitenaufprallträger ist mit seinen ebenen Enden an zugeordneten Bauteilen der Kfz-Tür befestigt, z.B. durch Schweißverbindungen oder Schraubverbindungen. Er besitzt bei der erforderlichen Biegesteifigkeit ein breites und torsionssteifes Profil. Das hat zur Folge, dass z.B. beim Pressen entstandene Verwerfungen zu Problemen beim Einbau in die Tür führen können.

Bekannt ist weiterhin ein Seitenaufprallträger aus einem stranggepressten Hohlprofil aus Aluminium (DE-PS 37 09 489), bei dem das Hohlprofil im Bereich seiner Ecken vorstehende Materialstreifen aufweist, die im Bereich der Längsmitte des Seitenaufprallträgers mit Ausnehmungen versehen sind, um einen Bruch des Hohlprofils zu verhindern und eine gleichmäßige Verformung des Seitenaufprallträgers zu gewährleisten.

Aufgabe der Erfindung ist es, einen Seitenaufprallträger der eingangs beschriebenen Gattung vorzuschlagen, der bei ausreichender Biegesteifigkeit trotzdem so torsionsweich ist, dass keine Probleme beim Einbau in die Tür entstehen und bei dem auf die aufwendige Herstellung durch die Warmumformung verzichtet werden kann.

Diese Aufgabe wird bei dem Seitenaufprallträger der eingangs beschriebenen Gattung dadurch gelöst, dass der Blechstreifen aus einem kaltumformbaren hochfesten Stahlwerkstoff mit einer Streckgrenze von mindestens 980 N/mm² und einer Zugfestigkeit von ca. 1.250 N/mm² besteht, der Sickengrund ein im wesentlichen halbkreisförmiges Profil besitzt und die außenseitigen Materialstreifen des Blechstreifens direkt anschließend an den Übergangsbereich Randausnehmungen aufweisen, die sich mindestens bis zur Sicke hin erstrecken.

Es hat sich erfindungsgemäß gezeigt, dass bei einem im wesentlichen halbkreisförmigen Profil ein hochfester Stahlwerkstoff mit den angegebenen Eigenschaften verwendet werden kann, der noch kaltumformbar ist. Diese Art der Herstellung ist preiswerter als die an sich bekannte Warmumformung. Durch die Anordnung der Randausnehmungen direkt anschließend an den Übergangsbereich wird der Seitenaufprallträger torsionsweicher bei gleichzeitiger ausreichender Biegesteifigkeit über einen möglichst großen Längenbereich. Im Kollisionsfall bleiben seine Verbindungen mit den zugeordneten Bauteilen der Kfz-Tür auch dann erhalten, wenn der Seitenaufprallträger außerhalb seiner Längsmittelebene belastet wird. Dann kann sich der mittlere Teil der Seitenaufprallträger zwar verdrehen, die Drehung wird aber von den Bereichen aufgenommen, in denen sich die Randausnehmungen befinden. Dementsprechend werden auch die Verbindungen mit der Kfz-Tür weniger belastet.

Vorzugsweise beträgt die Länge der Randausnehmungen 10 bis 20 % der profilierten Länge (einschließlich des Übergangsbereiches) des Blechstreifens. Die Tiefe der Sicke kann verhältnismäßig groß sein und vorzugsweise 20 bis 50 % der Breite des Seitenaufprallträgers entsprechen. Bei einer bevorzugten Ausführung weist der Blechstreifen zwei zueinander parallele Sicken auf.

Es hat sich außerdem als zweckmäßig erwiesen, die außenseitigen Materialstreifen des Seitenaufprallträgers in Richtung auf den Sickengrund derart umzubiegen, dass dieser mit dem Steg der Sicke ein Winkel von < 90° bildet.

Die Anschlusseinrichtung kann aus einer aus dem Ende des Blechstreifens aus der Blechebene hochgebogenen Anschlussfahne bestehen. Diese Anschlussfahne bildet eine zusätzliche Sicherung in Form eines Widerhakens, der beim seitlichen Aufprall eine Verbindung mit der Befestigungssäule der Tür bildet. Das ist insbesondere dann wichtig, falls die Schweißverbindung, mit der der Seitenaufprallträger mit den Türblechen verbunden ist, z.B. abscheren sollte. Die als Haken ausgebildete hochgebogene Anschlussfahne ist erfindungsgemäß in das Pressteil integriert und wird nicht als eigenes Teil zusätzlich angeschraubt oder angeschweißt. Dadurch wird eine zusätzliche Kosteneinsparung ermöglicht.

Der erfindungsgemäße Blechstreifen besitzt eine relativ geringe Dehnung von höchstens 4 bis 7 %.

Im folgenden wird ein in der Zeichnung dargestelltes Ausführungsbeispiel der Erfindung erläutert; es zeigen:
- Fig. 1: die Seitenansicht eines Seitenaufprallträgers,
- Fig. 2: eine Draufsicht auf den Gegenstand nach Fig. 1,
- Fig. 3 + 4: Schnitt in Richtung A-A durch den Gegenstand nach Fig. 1.

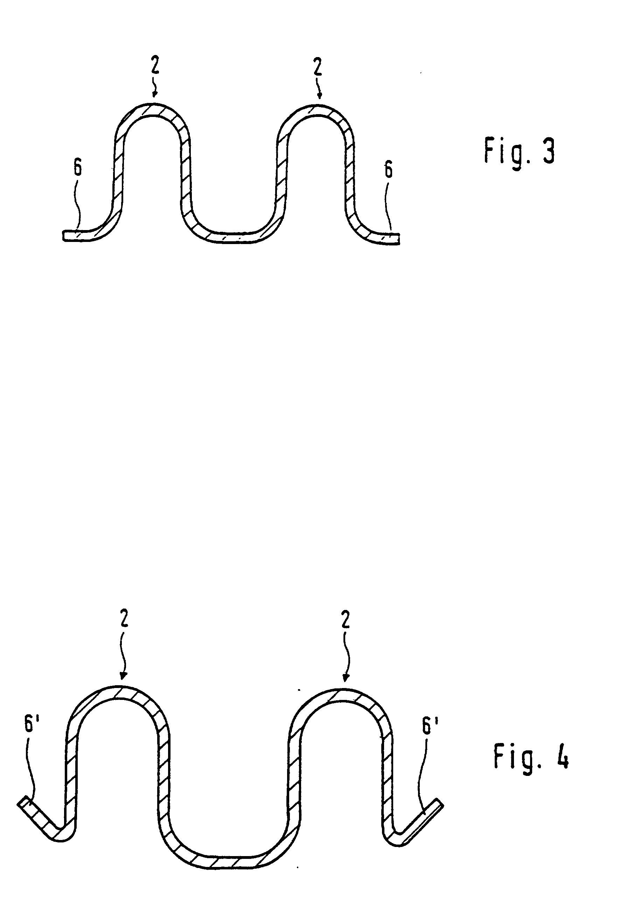

Der in der Zeichnung dargestellte Seitenaufprallträger besteht aus einem langgestreckten Blechstreifen 1, in den im Wege der Kaltumformung durch Tiefziehen und/oder Biegung zwei zueinander parallele Sicken 2 eingeprägt worden sind. Die Tiefe der Sicken 2 entspricht etwa 20 bis 50 % der Breite des Seitenaufprallträgers. Der Sickengrund hat ein halbkreisförmiges Profil (Fig. 3).

Die Sicken 2 erstrecken sich über den größeren Teil der Länge des Blechstreifens 1 bis zu Übergangsbereichen 3, in denen die Tiefe ihres Querschnittsprofiles in Richtung auf ebene Enden 4 des Blechstreifens 1 kontinuierlich abnimmt und in die ebenen Enden 4 übergeht.

Im mittleren Teil 5 des Seitenaufprallträgers sowie auch in den Übergangsbereichen 3 schließen an die Sicken 2 außenseitige Materialstreifen 6 an. Diese Materialstreifen 6 weisen Randausnehmungen 7 auf, die sich bis zu den Sicken 2 hin erstrecken und deren Länge 10 bis 20 % der profilierten Länge (einschließlich der Übergangsbereiche 3) des Blechstreifens 1 beträgt.

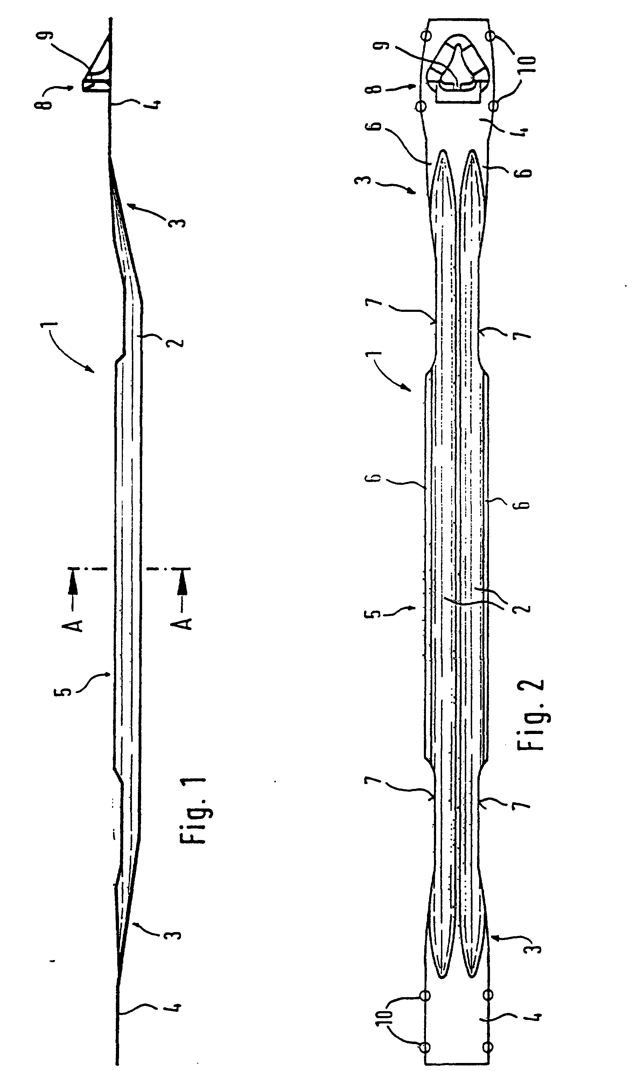

Die Enden 4 des Blechstreifens 1 werden üblicherweise über Schweißpunkte 10 mit den Türblechen verbunden. Als zusätzliche Sicherung ist entsprechend in Figuren 1 und 2 am rechten Ende 4 des Blechstreifens 1 eine aus der Blechebene hochgebogene Anschlussfahne 8 mit einer Bohrung oder einem Schlitz 9 vorgesehen. Diese Anschlussfahne 8 ragt bei geschlossener Tür in den Bereich der Befestigungssäule der Tür hinein und sorgt bei einem Seitenaufprall wie ein Widerhaken für eine zusätzliche Sicherung, falls die Schweißverbindung z.B. abscheren sollte.

Der Blechstreifen 1 besteht aus einem kaltumformbaren hochfesten Stahlwerkstoff mit Eigenschaften, wie sie im Patentanspruch 8 angegeben sind.

Wie in Fig. 4 dargestellt, können die außenseitigen Materialstreifen 6' in Richtung auf den Sickengrund derart umgebogen sein, dass diese mit dem Steg der Sicke 2 einen Winkel < 90° bilden.

### Bezugszeichenliste:

- 1: Blechstreifen
- 2: Sicken
- 3: Übergangsbereiche
- 4: Enden
- 5: Teil
- 6, 6': Materialstreifen
- 7: Randausnehmungen
- 8: Anschlussfahne
- 9: Schlitz
- 10: Schweißpunkte

## Patentansprüche

1. Seitenaufprallträger für Kfz-Türen aus einem im Querschnitt profilierten Blechstreifen, der wenigstens eine längslaufende Sicke und beidseits an die Sicke anschließende Materialstreifen aufweist, wobei der Blechstreifen im wesentlichen ebene Enden zur Befestigung an der Kfz-Tür aufweist und wobei die Höhe der Sicke im Übergangsbereich zu den ebenen Enden des Blechstreifens kontinuierlich abnimmt, **dadurch gekennzeichnet, dass** der Blechstreifen (1)
- aus einem kaltumformbaren hochfesten Stahlwerkstoff mit einer Streckgrenze von mindestens 980 N/mm² und einer Zugfestigkeit von ca. 1.250 N/mm² besteht,
- der Sickengrund ein im wesentlichen halbkreisförmiges Profil besitzt und
- die außenseitigen Materialstreifen (6) des Blechstreifens (1) direkt anschließend an den Übergangsbereich (3) Randausnehmungen (7) aufweisen, die sich mindestens bis zur Sicke (2) hin erstrecken.

2. Seitenaufprallträger nach Anspruch 1, **dadurch gekennzeichnet, dass** die Länge der Randausnehmungen (7) 10 bis 20 % der profilierten Länge (einschließlich der Übergangsbereiche) des Blechstreifens (1) beträgt.

3. Seitenaufprallträger nach Anspruch 1 oder 2, **dadurch gekennzeichnet, dass** die Tiefe der Sicke (2) 20 bis 50 % der Breite des Seitenaufprallträgers entspricht.

4. Seitenaufprallträger nach einem der Ansprüche 1 bis 3**, dadurch gekennzeichnet, dass** der Blechstreifen zwei zueinander parallele Sicken (2) aufweist.

5. Seitenaufprallträger nach einem der Ansprüche 1 bis 4, **dadurch gekennzeichnet, dass** die außenseitigen Materialstreifen (6') in Richtung auf den Sickengrund derart umgebogen sind, dass diese mit dem Steg der Sicke (2) einen Winkel von < 90° bilden.

6. Seitenaufprallträger nach einem der Ansprüche 1 bis 5, **dadurch gekennzeichnet, dass** die Anschlusseinrichtung aus einer aus dem Ende (4) des Blechstreifens (1) hochgebogenen Anschlussfahne (8) besteht.

7. Seitenaufprallträger nach einem der Ansprüche 1 bis 6, **dadurch gekennzeichnet, dass** der Stahlwerkstoff eine Dehnung von höchstens 4 bis 7 % aufweist.

## Claims

1. Side impact bar for motor vehicle doors consisting of a sheet metal strip which is profiled in cross-section and which has at least one longitudinally-extending bead and material strips which adjoin the bead on both sides, wherein the sheet metal strip has substantially planar ends for attachment to the motor vehicle door and wherein the height of the bead decreases continually in the transition region to the planar ends of the sheet metal strip, **characterised in that** the sheet metal strip (1)
- consists of a cold-formable high-strength steel material with a yield strength of at least 980N/mm² and a tensile strength of about 1 250N/mm²,
- the base of the bead has a substantially semi-circular profile and
- the outer material strips (6) of the sheet metal strip (1) have edge recesses (7) directly adjoining the transition region (3), which edge recesses extend at least as far as the bead (2).

2. Side impact bar as claimed in claim 1, **characterised in that** the length of the edge recesses (7) amounts to 10 to 20% of the profiled length (including the transition regions) of the sheet metal strip (1).

3. Side impact bar as claimed in claim 1 or 2, **characterised in that** the depth of the bead (2) corresponds to 20 to 50% of the width of the side impact bar.

4. Side impact bar as claimed in any one of claims 1 to 3, **characterised in that** the sheet metal strip has two mutually parallel beads (2).

5. Side impact bar as claimed in any one of claims 1 to 4, **characterised in that** the outer material strips (6') are bent in the direction of the base of the bead in such a way that they form an angle of <90° with the web of the bead (2).

6. Side impact bar as claimed in any one of claims 1 to 5, **characterised in that** the connection arrangement consists of a connection lug (8) which is bent upwards from the end (4) of the sheet metal strip (1).

7. Side impact bar as claimed in any one of claims 1 to 6, **characterised in that** the steel material has an extension capability of at most 4 to 7%.

## Revendications

1. Poutre d'enfoncement latéral pour portes de véhicules automobiles, formée dans une bande de tôle de section profilée, qui présente au moins une nervure longitudinale et, de part et d'autre de la nervure, des bandes de matière qui s'y raccordent, la bande de tôle présentant des extrémités sensiblement planes pour une fixation à une porte de véhicule automobile, et la hauteur de la nervure dans la région de transition vers l'extrémité plane de la bande de tôle diminuant en continu, **caractérisée en ce que** la bande de tôle (1)
- est constituée d'acier à haute résistance, façonnable à froid, avec une limite élastique d'au moins 980 N/mm², et une résistance à la traction d'environ 1.250 N/mm²,
- la base de la nervure présente un profil essentiellement semi-circulaire, et
- les bandes de matière extérieures (6) de la bande de tôle (1) présentent, directement à la suite de la région de transition (3), des évidements marginaux (7) qui s'étendent vers l'intérieur, au moins jusqu'à la nervure (2).

2. Poutre d'enfoncement latéral selon la revendication 1, **caractérisée en ce que** la longueur des évidements marginaux (7) fait 10 à 20 % de la longueur profilée (y compris les régions de transition) de la bande de tôle (1).

3. Poutre d'enfoncement latéral selon la revendication 1 ou 2, **caractérisée en ce que** la profondeur de la nervure (2) correspond à 20 à 50 % de la largeur de la poutre d'enfoncement latéral.

4. Poutre d'enfoncement latéral selon l'une des revendications 1 à 3, **caractérisée en ce que** la bande de tôle présente deux nervures (2) parallèles entre elles.

5. Poutre d'enfoncement latéral selon l'une des revendications 1 à 4, **caractérisée en ce que** les bandes de matière (6) extérieures sont cintrées dans la direction de la base de la nervure, d'une manière telle qu'elles forment avec l'aile de la nervure (2) un angle < 90°.

6. Poutre d'enfoncement latéral selon l'une des revendications 1 à 5, **caractérisée en ce que** le dispositif d'assemblage est formé par une patte d'assemblage (8) fortement cintrée hors de l'extrémité (4) de la bande de tôle (1).

7. Poutre d'enfoncement latéral selon l'une des revendications 1 à 6, **caractérisée en ce que** l'acier présente un allongement d'au plus 4 à 7 %.
